# EUROPEAN PATENT SPECIFICATION

(11) **EP 0 394 498 B1**
(45) Date of publication and mention of the grant of the patent: **31.07.1996**
(21) Application number: 89911871.5
(22) Date of filing: 25.10.1989
(51) Int. Cl.: F16H 61/10

(54) **SPEED CHANGE CONTROL METHOD FOR HYDRAULICALLY OPERATED MULTISTEP TRANSMISSIONS**
STEUERUNGSVERFAHREN FÜR DEN GANGWECHSEL VON HYDRAULISCH BETÄTIGTEN VIELGANGGETRIEBEN
PROCEDE DE COMMANDE DE CHANGEMENT DE VITESSE POUR DES TRANSMISSIONS A PLUSIEURS ETAGES A COMMANDE HYDRAULIQUE

(30) Priority: 27.10.1988 JP 269466/88; 18.11.1988 JP 291628/88
(43) Date of publication of application: 31.10.1990
(73) Proprietor: KABUSHIKI KAISHA KOMATSU SEISAKUSHO, Minato-ku Tokyo 107 (JP)
(72) Inventor: SOKA, Kohei Kawasaki Factory Kabushiki Kaisha, Kawasaki-shi Kanagawa-ken 210 (JP); KANEKO, Kiyoshi Kawasaki Factory Kabushiki Kaisha, Kawasaki-shi Kanagawa-ken 210 (JP); OKURA, Yasunori Research Institute, Hiratsuka-shi Kanagawa-ken 254 (JP); KATO, T. Electr. Appliances Manufacturing Dep., Hiratsuka-shi, Kanagawa-ken 254 (JP)
(74) Representative: TER MEER - MÜLLER - STEINMEISTER & PARTNER
(86) International application number: JP8901096
(87) International publication number: WO9004733

(56) References cited:
- JP-A- 5 837 368
- JP-A- 5 881 256
- JP-A-58 211 061

## Description

The present invention relates to a method of controlling speed ratio changes in hydraulically actuated multiple-stage speed ratio change gears according to the preamble of claim 1.

There has so far been known and used a speed change gear comprising a group of clutches comprised of a plurality of speed stage clutches, and forward/reversing clutches, and a group of valves comprised of valves for speed stages for selectively supplying pressurized fluid into these clutches and valves for driving in forward and reverse direction, wherein a valve for any selected one of speed stages and the valve for forward running or the valve for reversing are changed over so as to put the clutch for the selected speed stage and either the forward running clutch or the reversing clutch, respectively, in engaged condition, thereby changing the speed change gear to any desired speed stage.

This speed change gear is arranged to control speed changes of the vehicle as described below.

Stating in brief, the arrangement is made such that the vehicle speed and the degree of opening of the accelerator, etc. are input to a controller. The controller compares a vehicle speed V₁ set at each speed stage with the actual vehicle speed V₀, and outputs a downshift command in case V₁ is more than V₀ and outputs an upshift command in case V₁ is less than V₀ so as to disengage or release the presently engaged clutch and then engage a clutch corresponding to the next speed stage, thereby automatically changing the vehicle speed.

Such a method of controlling speed changes is arranged to upshift or downshift the vehicle when conditions for upshifting or downshifting are met. Depending on running conditions of the vehicle, traction load increases or decreases suddenly so that conditions for upshifting and those for downshifting are met repeatedly for a short time thereby causing repetition of upshifts and downshifts for a short time, so-called "shift hunting" which results in unstable control of speed changes.

To solve this problem, it is only necessary to provide, after completion of speed change operations, an appropriate time lag from the time when conditions for upshifting or downshifting are met until an upshift command or a downshift command is output.

Stating more specifically, to eliminate the shift hunting, it is only necessary to inhibit the speed change gear from conducting any speed change until a preset time has passed after completion of speed change operations, even though the above-mentioned conditions for upshifting or downshifting are met. This preset time is referred to as speed change inhibiting time.

However, if the speed change inhibiting time is too long, then an extended period of time is needed from the time when conditions for a speed change are met until completion of the speed change. As a result, upon starting and accelerating the vehicle, a longer time is required to "upshift" (or increase the speed of) the vehicle causing poor acceleration, while if the speed change inhibiting time is kept short, then an improved acceleration is obtained, but the above-mentioned shift hunting is liable to occur.

The JP-A 58-81256 discloses a speed change system of the present kind having a controller which detects the vehicle speed and the throttle position. Gear changes are inhibited for a certain period of time in case the throttle position is changed abruptly.

Further, there is known a hydraulically actuated type multiple-stage speed change gear comprising a plurality of hydraulic clutches and gear trains, and arranged such that a speed change of the gear trains to a predetermined speed stage can be conducted by operating or engaging a predetermined clutch.

Such a hydraulically actuated multiple-stage speed change gear is used in combination with a torque converter to increase the tractive force available when the vehicle is started.

Since a large-sized construction vehicle, for example a large-sized dumptruck is required to run at a high speed, a torque converter fitted with a direct coupled clutch which connects pump impellers and turbine blades thereof is used so as to render the direct coupled clutch on when the vehicle is running to enable a high torque to be transmitted efficiently. However, controls of speed changes are made such that at the time of a speed change the direct coupled clutch is rendered off and the load on the hydraulic clutch of the speed change gear is reduced by the torque converter, and after completion of the speed change the direct coupled clutch is rendered on or engaged.

More specifically, if a speed change of the gear train is made with the direct coupled clutch kept on, then a high load is exerted on the hydraulic clutch thus increasing shocks due to the speed change. Therefore, at the time of a speed change, the direct coupled clutch is rendered off to reduce the load exerted on the hydraulic clutch thereby reducing shocks due to the speed change.

According to such a method of controlling speed changes, at the time of speed change both speed change shocks due to engagement of the hydraulic clutch and those due to engagement of the direct coupled clutch will occur so as to increase the magnitude of shocks which occur at the time of the speed change, thus transmitting unpleasant jolts to the driver and passengers.

Furthermore, if the capacity of the hydraulic clutch is increased, then the load exerted on the hydraulic clutch when it is rendered on can be reduced to some degree, however, the speed change gear becomes larger and more expensive than necessary.

The present invention has been made in view of the above-mentioned circumstances in the prior art, and has for its object to provide a method of controlling speed changes in a hydraulically actuated type multiple-stage speed change gear, which renders it possible to prevent the occurrence of shift hunting without impairing the acceleration characteristics.

Further, another object of the present invention is to provide a method of controlling speed changes in a hydraulically actuated type multiple-stage speed change gear, which renders it possible to reduce shocks that occur at the time of a speed change and also reduce the capacity of the hydraulic clutch.

To achieve these objects, the invention is characterized by the features of claim 1.

Further features of the invention may be taken from the subclaims.

The present invention, incorporating the above-mentioned aspect, has the following advantages:

In cases where a downshift is made after an upshift and an upshift is made after a downshift, repetition of upshifts and downshifts for a short time does not occur and therefore, shift hunting does not occur, and therefore safe speed change controls can be achieved. In other cases than the aforementioned, speed changes are conducted after the lapse of a short speed change inhibiting time so that the acceleration characteristics can be enhanced.

Further, only in cases where the vehicle is decelerated from such a high speed that the speed change gear is in a high speed stage to a coasting speed, a downshift is made with the direct coupled clutch kept in engaged condition, and therefore shocks due to engagement of the direct coupled clutch do not occur, and also in that case the torque to be transmitted is low and the load exerted on the hydraulic clutches is low so that most of shocks which occur at the time of speed changes can be absorbed even by a hydraulic clutch of a small capacity.

Thus, not only shocks which occur at the time of speed changes can be reduced thereby reducing the jolts transmitted to the driver, but also in case the torque to be transmitted is high and the load applied to the hydraulic clutch at the time of a speed change is high, the speed change is conducted with the direct coupled clutch kept in released condition. Therefore, even if hydraulic clutches of a small capacity are used, the durability thereof can be secured.

Further, since the vehicle is downshifted with the direct coupled clutch of the torque converter kept in engaged condition, engine braking action can be utilized effectively so that the vehicle can be decelerated smoothly in a short time.

The above-mentioned and other objects, aspects and advantages of the present invention will become apparent to those skilled in the art from the following description and accompanying drawings in which preferred embodiments incorporating the principles of the present invention are shown by way of example only.
Fig. 1 is a schematic, configurational explanatory view of a power transmission system of a construction vehicle in which a speed change controlling system circuit according to the present invention is incorporated;
Fig. 2 shows one embodiment of the hydraulic circuit of a speed change gear;
Fig. 3 is a schematic, block diagram showing another embodiment of the speed change controlling system circuit;
Figs. 4(1) and 4(2) are flow charts showing speed change controlling operations;
Fig. 5 consists of graphs showing changes in fluid pressure in a hydraulically actuated clutch and a direct coupled clutch, respectively;
Fig. 6 shows another embodiment of the hydraulic circuit of the speed change gear;
Figs. 7A, 7B and 7C are graphs showing relationships between the command value of electric current through a proportional action solenoid, the pressure in a clutch chamber, and the signal output transmitted when the clutch chamber is filled with fluid, respectively as the ordinate, and the time as the abscissa; and
Fig. 8 is another flow chart showing speed change controlling operations.

The present invention will now be described below with reference to the accompanying drawings showing several embodiments of the present invention.

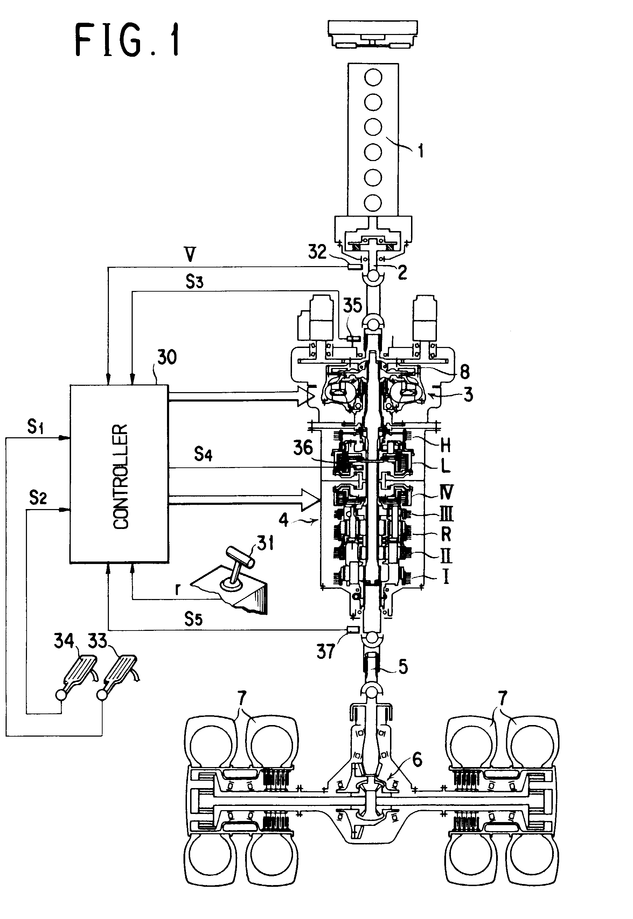

An example of power transmission systems of construction vehicles is arranged as shown in Fig. 1. An output shaft 2 of engine 1 is connected to the input shaft of a torque converter 3 whose output shaft is connected to the input shaft of a hydraulically actuated type speed change gear 4, the output shaft of which is connected by way of a shaft 5 and a differential gear, etc. to the left and right drive wheels 7.

The above-mentioned torque converter 3 comprises a clutch 8 which directly couples the input and output shafts of a pump impeller and a turbine rotor, and the above-mentioned hydraulically actuated type multiple-stage speed change gear 4 comprises a high speed hydraulic clutch H, a low speed hydraulic clutch L, a fourth hydraulic clutch IV, a third hydraulic clutch III, a reversing hydraulic clutch R, a second hydraulic clutch II, and a first hydraulic clutch I. A variety of speed change operations given in TABLE I below can be made by selectively engaging or disengaging each of the hydraulic clutches.

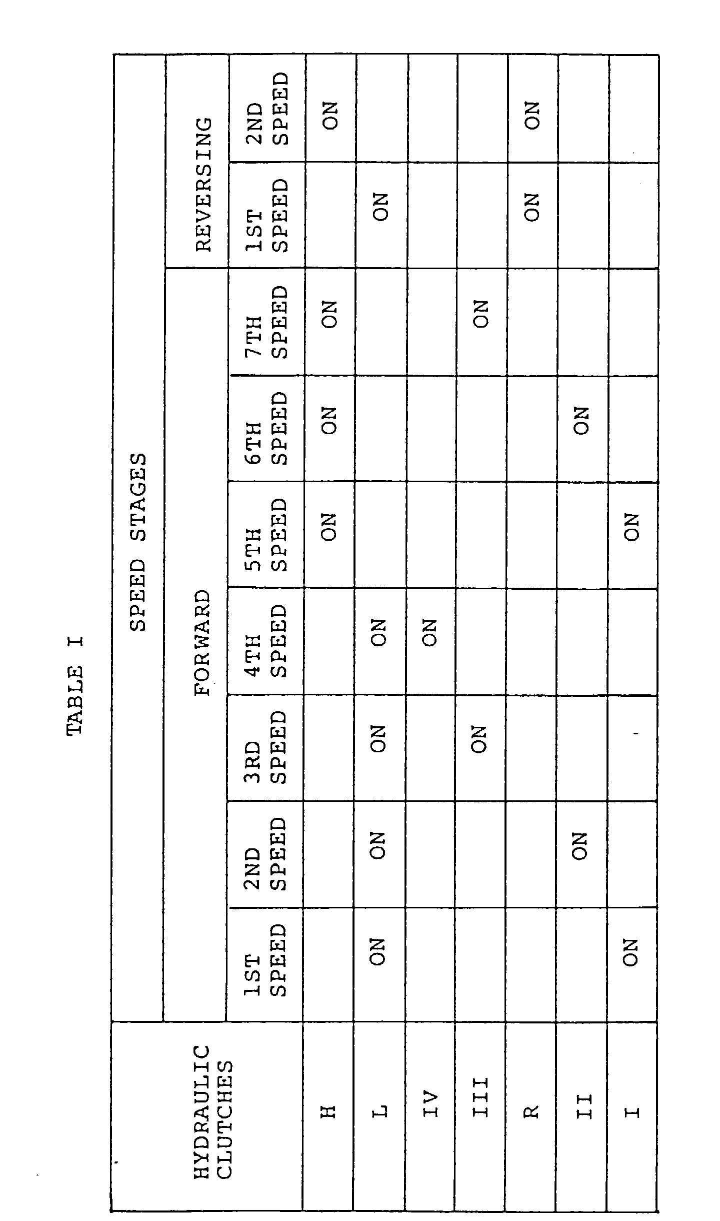

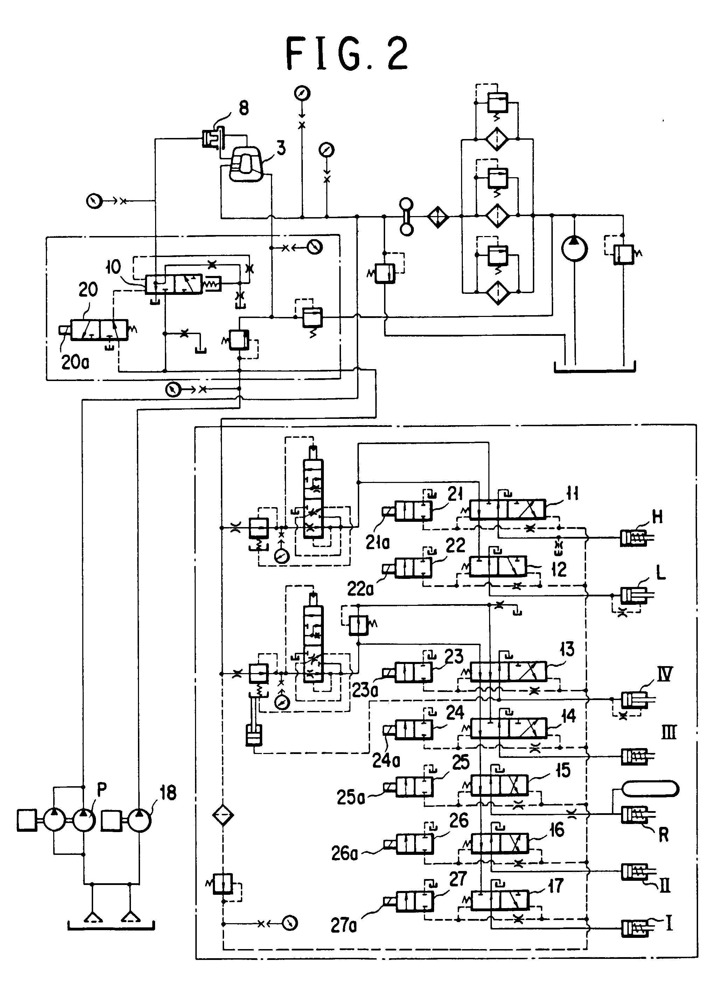

As shown in Fig. 2, the supply of fluid under pressure discharged by a pump 18 into the above-mentioned direct coupled clutch 8 is controlled by a valve 10 for use with the direct coupled clutch 8, whilst the supply of fluid under pressure discharged by the pump 18 into each of the hydraulic clutches of the speed change gear 4 is controlled by each of valve groups associated with the speed change clutches, i.e., a valve 11 for use with the high speed clutch, a valve 12 for use with the low speed clutch, a valve 13 for use with the fourth clutch, a valve 14 for use with the third clutch, a valve 15 for use with the reversing clutch, a valve 16 for use with the second clutch, and a valve 17 for use with the first clutch, respectively. The actuation of the valve 10 associated with the direct coupled clutch 8 is changed over by a first solenoid valve 20, and those of the valves associated with the other hydraulic clutches are changed over by a second solenoid valve 21, a third solenoid valve 22, a fourth solenoid valve 23, a fifth solenoid valve 24, a sixth solenoid valve 25, a seventh solenoid valve 26, and an eighth solenoid valve 27, respectively. Each of the solenoid valves 20 to 27 is controlled in such a manner that when each of the solenoids 20a to 27a is energized, each of the valve 10 associated with the direct coupled clutch 8 and the valves associated with the other hydraulic clutches is rendered ON or opened so that each of the clutch chambers is supplied with fluid under pressure discharged by the pump 18 thereby engaging each of the hydraulic clutches, respectively.

The above-mentioned configuration is publicly known, and therefore detailed description thereof is omitted herein.

Energization of the above-mentioned solenoids 20a and 27a is controlled by a controller 30 as shown in Fig. 1, and also input to the controller 30 are a speed stage signal (speed change positional signal) r from a gear-shifting lever 31, an engine speed signal V from a sensor 32 sensing the number of revolutions of the engine 1 (signal indicative of the number of revolutions of the engine) from which vehicle speed is determined, an acceleration OFF signal S₁ from an acceleration sensor 33, a brake OFF signal S₂ from a brake pedal 34, a speed change gear input revolution signal S₃ from a first revolution sensor 35, an intermediate shaft revolution signal S4 from a second revolution sensor 36 and an output shaft revolution sensor S₅ from a third revolution sensor 37, etc.. The arrangement is made such that when predetermined conditions for a speed change are met the controller 30 will output a speed change command to any appropriate two pieces out of the solenoids 20a to 27a.

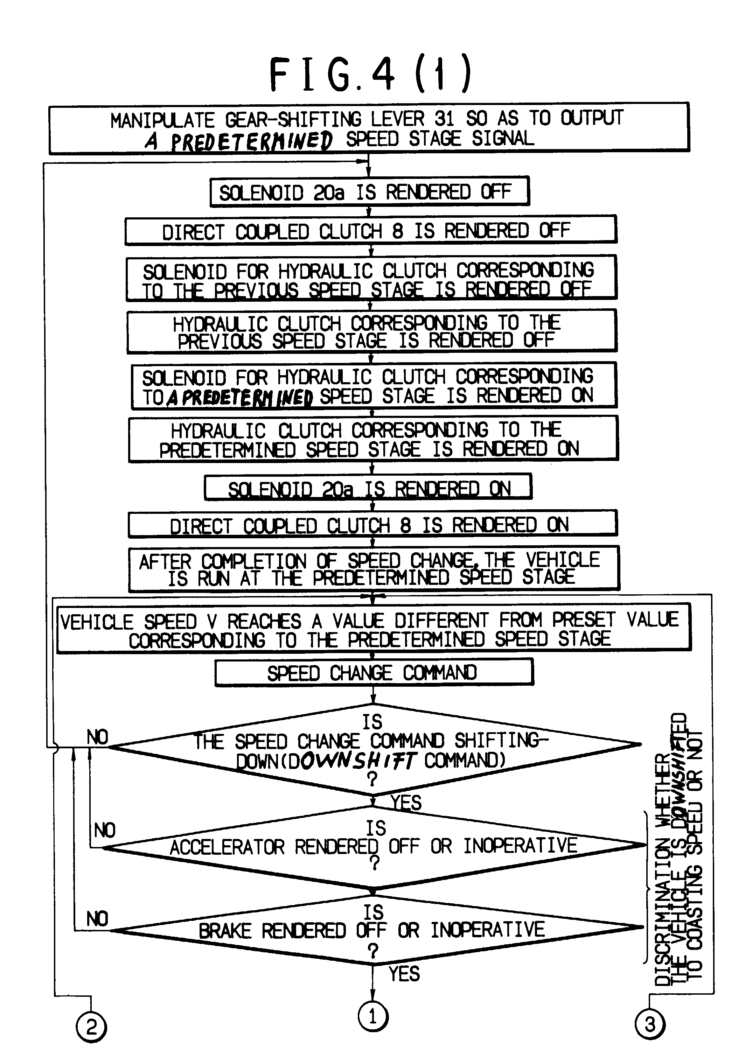

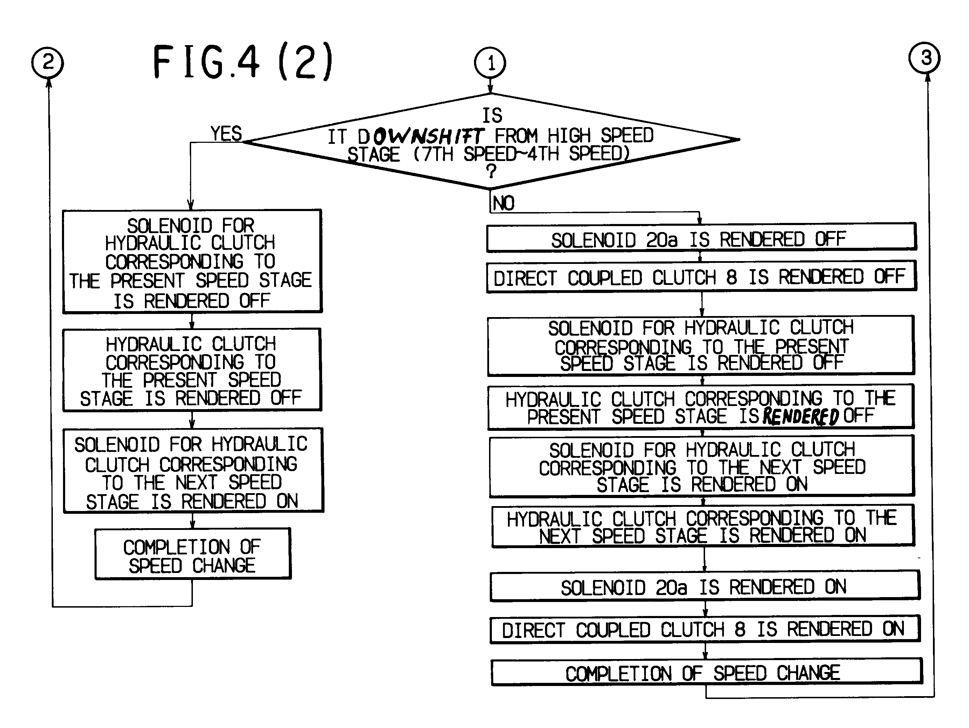

Speed controls according to a first aspect of the present invention are shown in the flow chart in Fig. 4.

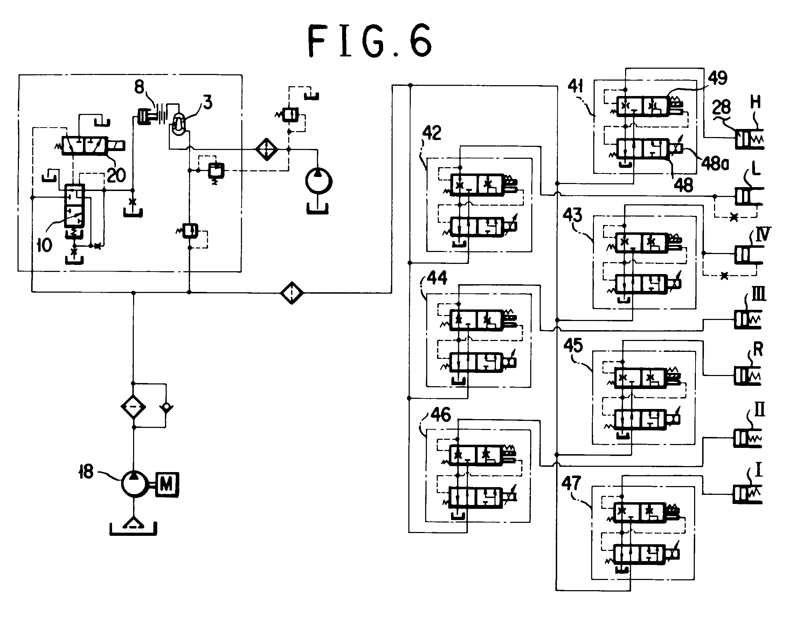

In the flow chart shown in Fig. 4, ON/OFF controls of the solenoid 20a are made such that simultaneously with the transmission of a speed change command a delay timer is actuated so as to cause increases and decreases in fluid pressure in the hydraulic clutches and the direct coupled clutch 8 as shown in Fig. 5.

Stating in brief, in case it is desired to decelerate the vehicle from such a high speed that the speed change gear is in any high speed stage between the seventh speed and the fourth speed, for example, to a coasting speed which is attainable by rendering the accelerator and the brake OFF, the speed change gear can be downshifted with the direct coupled clutch 8 kept in engaged condition, and also when it is desired to decelerate the vehicle from such a low speed that the speed change gear is in any low speed stage such as for example, the third or second speed to a coasting speed, the speed change gear can be downshifted with the direct coupled clutch 8 kept in disengaged condition.

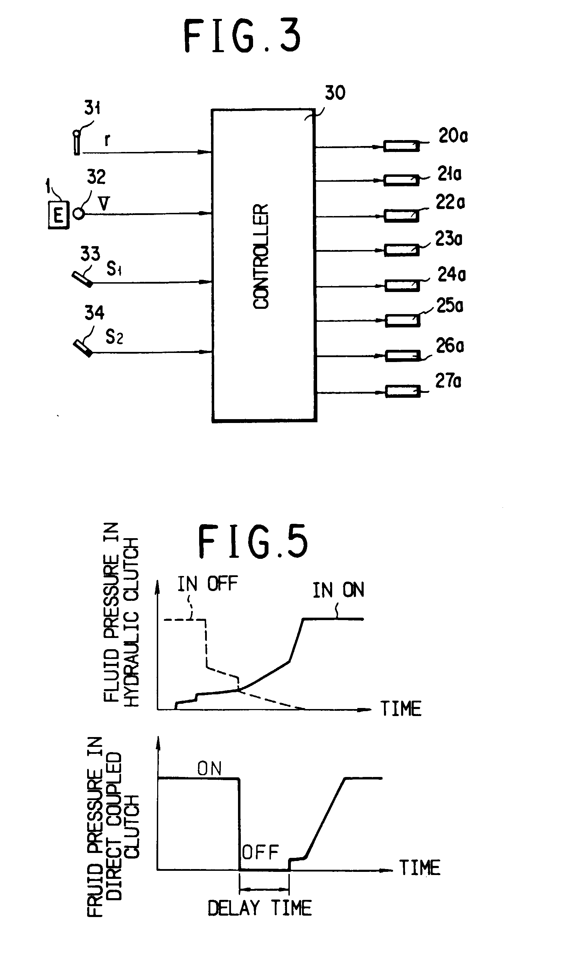

Further, in the speed control according to this first aspect, it is not necessary to input the above-mentioned signals S₃, S₄ and S₅ to the controller 30, as can be seen from Fig. 3.

In the next place, a second aspect of the speed control according to the present invention will be described with reference to Figs. 6 to 8.

Fig. 6 shows another embodiment of the hydraulic control circuit of the hydraulically actuated type speed change gear. The hydraulic control circuit shown in Fig. 6 comprises a valve 41 for use with the high speed hydraulic clutch H, a valve 42 for use with the low speed hydraulic clutch L, a valve 43 for use with the fourth hydraulic clutch IV, a valve 44 for use with the third hydraulic clutch III, a valve 45 for use with the reversing hydraulic clutch R, a valve 46 for use with the second hydraulic clutch II, and a valve 47 for use with the first hydraulic clutch I, each of the valves serving to selectively supply pressurized fluid discharged by the pump 18 into its associated clutch. Each of these valves for the hydraulic clutches comprises a pressure control valve 48 and a flow rate control valve 49.

The pressure control valve 48 is adapted to control the fluid pressure by the electric current supplied to a proportional action solenoid 48a. The proportional action solenoid 48a is supplied with electric current from the above-mentioned controller 30.

The above-mentioned flow rate control valve 49 is actuated by a trigger from the pressure control valve 48 and is kept in communicating condition until the clutch's pressure chamber 28 is filled with fluid under pressure. At the same time when the pressure chamber 28 becomes full of pressurized fluid, the flow rate control valve 49 is disconnected and will transmit to the controller 30 a signal indicating that the chamber 28 is filled with pressurized fluid. When a fluid pressure is applied to the clutch pressure chamber 28, the flow rate control valve 49 continues to transmit to the controller 30 a signal indicating that the clutch chamber is filled with fluid under pressure, thereby indicating the presence of fluid pressure therein.

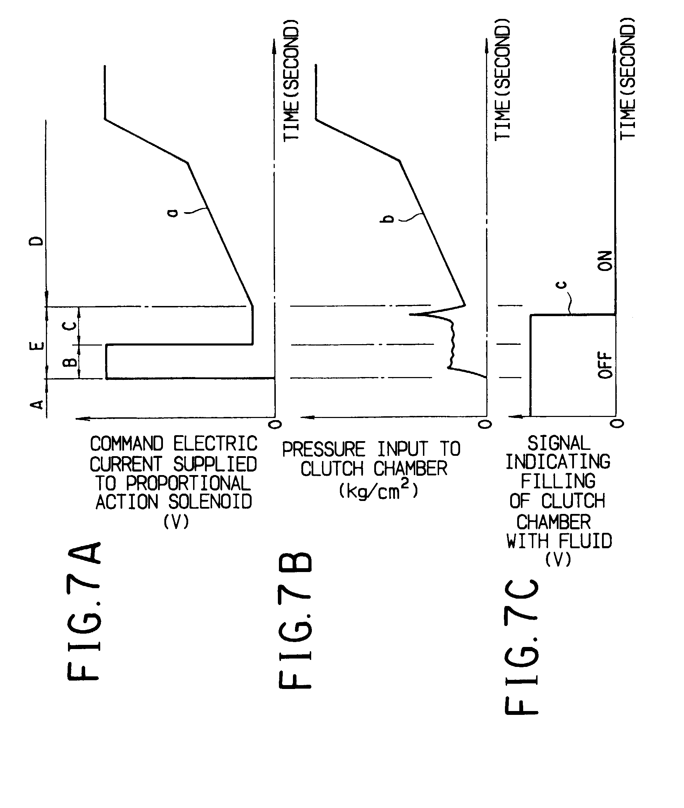

The command electric current supplied to the above-mentioned proportional action solenoid 48a is controlled as shown in Fig. 7A, and the fluid pressure in the clutch chamber 28 varies as shown in Fig. 7B, while the signal indicating the completion of filling the clutch chamber with pressurized fluid is rendered ON and OFF as shown in Fig. 7C.

In Figs. 7A, 7B and 7C, reference character A denotes values before speed change (when fluid in the clutch chamber 29 is drained), B denotes values when filling of the clutch chamber 28 with pressurized fluid is commenced (during triggering), C denotes values when the clutch chamber has been filled with fluid, D denotes values when the fluid pressure in the clutch chamber is gradually increasing, and E denotes values when the clutch chamber is being filled with pressurized fluid.

When a forward first speed command is output by the controller 30, the valve 42 for use with the low speed hydraulic clutch and the valve 47 for use with the first speed hydraulic clutch are each supplied with a command electric current so that the low speed hydraulic clutch L and the first speed hydraulic clutch I, respectively, are rendered operative or engaged thereby changing the speed change gear 4 to the forward first speed stage. Other speed change operations are made in the like manner as indicated in the above-mentioned TABLE I.

In the next place, the method of controlling speed changes according to the second aspedt will be described.

If conditions for upshift are met when the vehicle is running at a predetermined speed stage, then the controller 30 will discriminate whether the previous speed change was an upshift or downshift, and in case it is upshift, output an upshift command after a short speed change inhibiting time, while in case it is downshift, output an upshift command after a long speed change inhibiting time.

In the same manner, if conditions for downshift are met when the vehicle is running at a predetermined speed stage, then the controller 30 will discriminate whether the previous speed change was a downshift or an upshift, and in case it was a downshift, output a downshift command after a short speed change inhibiting time, while in case it is upshift, output a downshift command after a long speed change inhibiting time.

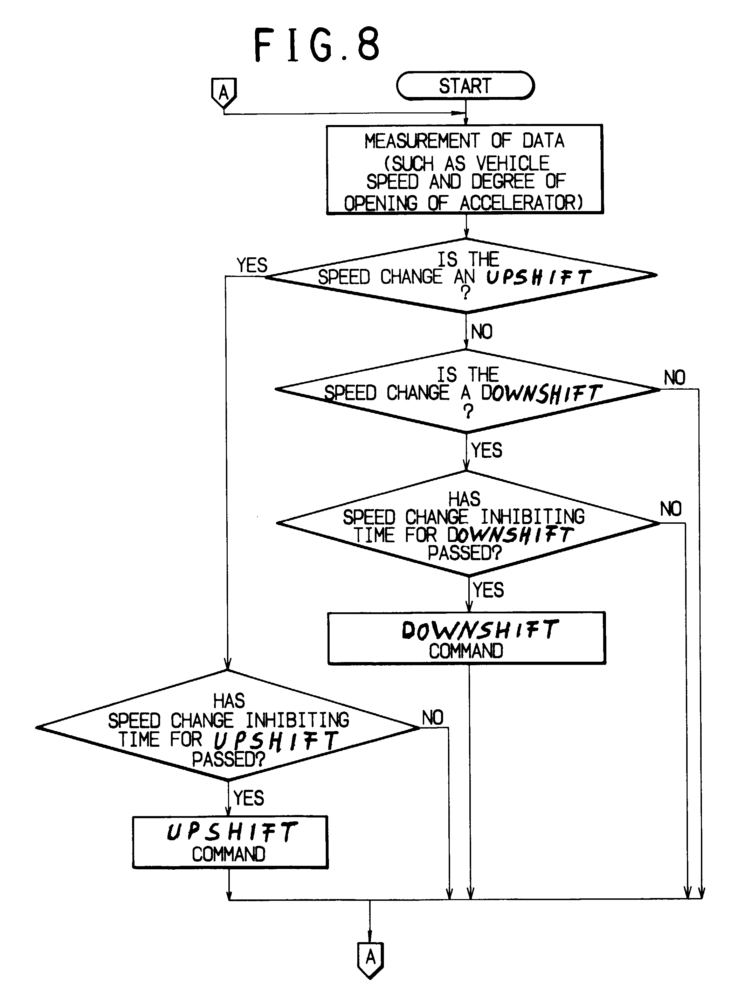

The above-mentioned speed controls are tabulated in the following table II and shown in the form of a flow chart in Fig. 8.

**TABLE II**

| UNIT : SECOND | | |
|---|---|---|
| | SPEED CHANGE INHIBITING TIME | |
| | IN CASE OF UPSHIFT | IN CASE OF DOWNSHIFT |
| AFTER F₁ → F₂ | 0.2 | 1.87 |
| AFTER F₂ → F₃ | 0.2 | 1.33 |
| AFTER F₄ → F₅ | 0.2 | 1.91 |
| AFTER F₅ → F₆ | 0.2 | 1.91 |
| AFTER F₆ → F₇ | 0.2 | 1.91 |
| AFTER F₂ → F₁ | 1.10 | - |
| AFTER F₃ → F₂ | 2.23 | 0.2 |
| AFTER F₄ → F₃ | 0.69 | 0.2 |
| AFTER F₅ → F₄ | 2.23 | 0.2 |
| AFTER F₆ → F₅ | 2.23 | 0.2 |
| AFTER F₇ → F₆ | 2.23 | 0.2 |

As mentioned above, in case a downshift is made after an upshift (for example, F₁ → F₂ → F₁) and also in case an upshift is made after a downshift (for example, F₃ → F₂ → F₃), the speed change inhibiting time is kept long thereby preventing the occurrence of shift hunting, while the speed change inhibiting time when conducting other speed changes is kept short so that the acceleration characteristics of the vehicle can be enhanced.

In case speed controls are made as mentioned hereinabove using the above-mentioned valves for use with the hydraulic clutches each comprising a pressure control valve 48 and a flow rate control valve 49, upon effecting a speed change by engaging and disengaging one and the same clutch as in the cases of an upshift after a downshift, and a downshift after an upshift, the fluid in the clutch chamber of one clutch is not completely drained, which results in filling of the clutch chamber with pressurized fluid during triggering, thus causing sudden increase in fluid pressure in the clutch chamber instead of gradual increase so as to engage the clutch thereby bringing forth such disadvantages as the occurrence of large shocks due to speed changes and damage of the clutch. However, the above-mentioned disadvantages can be eliminated by keeping the speed change inhibiting time long as mentioned above to enable the fluid in the clutch chamber to be drained completely.

In case a speed change is made, for example, from the forward second speed (the second speed clutch and the low speed clutch are rendered operative) to the forward third speed (the second speed clutch and the high speed clutch are rendered operative) and back to the forward second speed (the second speed clutch and the low speed clutch are rendered operative), the low speed clutch is engaged and disengaged, and therefore if the speed change inhibiting time is kept short, then a speed change command is input when the fluid in the clutch chamber of the low speed clutch is not completely drained, thus causing the clutch chamber to be filled with pressurized fluid during triggering so as to cause sudden increase in fluid pressure in the clutch chamber instead of gradual increase.

In contrast therewith, if the speed change inhibiting time is kept long, then a speed change command is input after the fluid in the clutch chamber has been completely drained, so that the fluid pressure in the clutch chamber can be increased gradually.

## Claims

1. A method of controlling speed ratio changes in a hydraulically actuated type multiple-stage speed ratio change gear, arranged for conducting speed ratio change operations when conditions for speed ratio changes in the form of upshifts and downshifts are met, the upshifts and downshifts being delayed to prevent hunting, **characterized** by the steps of:
- determining when a first shifting condition occurs if a downshift is indicated by a controller just after an upshift has been made, or an upshift is indicated by the controller just after a downshift has been made;
- delaying speed ratio change operations for a relatively long first shifting inhibiting time when said first shifting condition has occurred; and
- delaying speed ratio change operations for a second shift inhibiting time which is shorter than said first inhibiting time, when a shifting condition other than said first shifting condition has occurred.

2. A method of controlling speed ratio changes in a hydraulically actuated type multiple-stage speed ratio change gear as claimed in claim 1, said gear being combined with a torque converter having a direct coupled clutch, **characterized** by the further steps of:
- determining when a second shifting condition occurs, being when the vehicle is decelerated from a high speed to a coasting speed;
- conducting downshifting operations with the direct coupled clutch of the torque converter kept in an engaged condition when said second shifting condition occurs; and
- conducting speed ratio change operations with the direct coupled clutch kept in a released condition in all cases where the second shifting condition does not occur.

3. A method of controlling speed ratio changes in a hydraulically actuated type multiple-stage speed ratio change gear as claimed in claim 1, **characterized** by the further steps of:
- controlling speed ratio changes in accordance with predetermined instructions by means of said controller;
- providing a speed ratio change command based on signals input to said controller including a speed stage signal from a gear shifting lever, an engine speed signal from an engine revolution sensor from which vehicle speed is determined, an accelerator OFF signal from an acceleration sensor, a brake OFF signal from a brake pedal, a speed ratio change gear input revolution signal, an intermediate shaft revolution signal and an output revolution signal.

## Patentansprüche

1. Verfahren zum Steuern von Gangwechseln in einem hydraulisch betätigten Vielganggetriebe, das zum Durchführen von Gangwechsel-Vorgängen eingerichtet ist, wenn die Bedingungen für Gangwechsel in Form von Hochschalten und Herunterschalten gegeben sind, welches Hochschalten und Herunterschalten zur Vermeidung von pendelnden Gangwechseln verzögert wird, **gekennzeichnet** durch die Schritte:
- Bestimmen, wenn eine Schaltbedingung auftritt, ob von einer Steuerung ein Herunterschalten angezeigt wird, nachdem soeben ein Hochschalten durchgeführt wurde, oder ob von der Steuerung ein Hochschalten angezeigt wird, nachdem soeben ein Herunterschalten durchgeführt wurde;
- Verzögern der Gangwechsel-Vorgänge um eine relativ lange erste Schaltverzögerungszeit, wenn die erste Schaltbedingung aufgetreten ist; und
- Verzögern der Gangwechsel-Vorgänge um eine zweite Schaltverzögerungszeit, die kürzer ist als die erste Verzögerungszeit, wenn eine Schaltbedingung aufgetreten ist, die sich von der ersten Schaltbedingung unterscheidet.

2. Verfahren zum Steuern von Gangwechseln in einem hydraulisch betätigten Vielganggetriebe gemäß Anspruch 1, welches Getriebe mit einem Drehmomentwandler kombiniert ist, der eine direkt gekoppelte Kupplung aufweist, **gekennzeichnet** durch die weiteren Schritte:
- Bestimmen, wann eine zweite Schaltbedingung auftritt, die dann vorhanden ist, wenn das Fahrzeug von einer hohen Geschwindigkeit auf eine Auslaufgeschwindigkeit verlangsamt wird;
- Durchführen von Herunterschalt-Vorgängen mit der direkt gekoppelten Kupplung des Drehmomentwandlers, die in einem eingekuppelten Zustand gehalten wird, wenn die zweite Schaltbedingung auftritt; und
- Durchführen von Gangwechsel-Vorgängen mit der direkt gekoppelten Kupplung, die in den Fällen in einem gelösten Zustand gehalten wird, bei denen die zweite Schaltbedingung nicht auftritt.

3. Verfahren zum Steuern von Gangwechseln in einem hydraulisch betätigten Vielganggetriebe gemäß Anspruch 1, **gekennzeichnet** durch die weiteren Schritte:
- Steuern der Gangwechsel in bezug auf vorgegebene Anweisungen durch die Steuerung;
- Bereitstellen eines Gangwechsel-Befehls, der auf Signalen basiert, die der Steuerung zugeführt werden, welche Signale einschließen ein Gangstufen-Signal von einem Schalthebel, ein Motordrehzahl-Signal von einem Motordrehzahl-Sensor, aus denen die Fahrzeuggeschwindigkeit bestimmt wird, ein Beschleunigungsvorrichtung-Aus-Signal von einem Beschleunigungssensor, ein Bremse-Aus-Signal von einem Bremspedal, ein Getriebe-Eingangsdrehzahl-Signal und ein Ausgangsdrehzahl-Signal.

## Revendications

1. Procédé de commande de changements de rapport de vitesse dans une boîte de vitesses à multi-étages du type à action hydraulique, destiné à réaliser des opérations de changement de vitesse lorsque des conditions de changement de rapport de vitesse vers le haut et vers le bas sont réunies, les changements de vitesse vers le haut et vers le bas étant retardés pour empêcher le pompage, caractérisé par les étapes consistant à :
- déterminer l'instant où se produit une première condition de changement de vitesse si un changement vers le bas est indiqué par un organe de commande juste après avoir effectué un changement de vitesse vers le haut, ou un changement de vitesse vers le haut est indiqué par l'organe de commande juste après avoir effectué un changement de vitesse vers le bas ;
- retarder les opérations de changement de rapport de vitesse pendant une durée relativement longue bloquant un premier changement de vitesse lorsque ladite première condition de changement de vitesse est survenue ; et
- retarder les opérations de changement de rapport de vitesse pendant une deuxième durée bloquant le changement de vitesse qui est plus courte que la première durée de blocage, lorsqu'une condition de changement de vitesse autre que ladite première condition de changement de vitesse est survenue.

2. Procédé de commande de changement de rapport de vitesse dans une boîte de vitesses à multi-étages du type à action hydraulique selon la revendication 1, ladite boîte de vitesses étant associée à un convertisseur de couple possédant un embrayage directement relié, caractérisé par les étapes supplémentaires consistant à :
- déterminer l'instant où se produit une deuxième condition de changement de vitesse, lorsque le véhicule est déccéléré depuis une vitesse élevée vers une vitesse de roue libre ;
- réaliser des opérations de changement de vitesse vers le bas avec l'embrayage directement relié du convertisseur de couple maintenu dans un état de mise en prise lorsque ladite deuxième condition de changement de vitesse survient ; et
- réaliser des opérations de changement de rapport de vitesse avec l'embrayage directement relié maintenu dans un état débrayé dans tous les cas où la deuxième condition de changement de vitesse ne survient pas.

3. Procédé de commande de changement de rapport de vitesse dans une boîte de vitesse à multi-étages du type à action hydraulique selon la revendication 1, caractérisé par les étapes supplémentaires consistant à :
- commander des changements de rapport de vitesse en fonction d'instructions prédéterminées par l'intermédiaire dudit organe de commande ; et
- établir une commande de changement de vitesse basée sur l'envoi de signaux audit organe de commande incluant un signal d'état de vitesse à partir d'un levier de changement de vitesse, un signal de vitesse du moteur à partir d'un capteur de rotation du moteur à partir duquel la vitesse du véhicule est déterminée, un signal d'arrêt d'accélérateur à partir d'un capteur d'accélération, un signal d'arrêt de frein à partir d'une pédale de frein, un signal d'entrée de rotation de la boîte de vitesse, un signal intermédiaire de rotation de l'arbre et un signal de sortie de rotation.
